# EUROPEAN PATENT APPLICATION

(11) **EP 4 696 597 A2**
(43) Date of publication of application: **18.02.2026**
(21) Application number: 25195880.7
(22) Date of filing: 14.08.2025
(51) Int. Cl.: B62K 13/08, B62K 9/00, B62K 15/00, B62K 19/18, B62K 3/10, B62J 13/04, B62K 19/34, B62K 19/36, B62K 19/44, B62K 21/22

(54) **MODULAR RIDING VEHICLE**

(30) Priority: 15.08.2024 IL 31502424
(71) Applicant: Doona Holdings Ltd., Quarry Barry (HK)
(72) Inventor: MAZAR, Yoav, HONG KONG (HK); DLUGASH, Brian, HONG KONG (HK)
(74) Representative: Lavoix

(57) **Abstract**

A front assembly (18) for use with a rear module (20, 220) to form a riding vehicle (4, 204) is disclosed. The front assembly includes an elongate frame (24), a mount (54) disposed beneath the elongate frame, a head assembly (22) with a front wheel (6) and handlebar (10), and a seat (14) mounted relative to the elongate frame. The elongate frame terminates in two laterally spaced apart prongs (32) removably securable to connectors (36, 236) of the rear module. The connectors and elongate frame together constitute a bicycle frame (12, 212). The riding vehicle may be convertible between different configurations, such as a balance bicycle and a pedal bicycle, by interchanging rear modules. The rear modules may have different wheel sizes and connector geometries while maintaining compatibility with the front assembly. The riding vehicle may include features for partially encasing the mount in different configurations and may be foldable for compact storage.

## Description

### TECHNOLOGICAL FIELD

The subject matter of the present specification relates to a modular riding vehicle, having a front assembly and interchangeable rear modules.

### BACKGROUND

US9669891B2 to Evans discloses "A bicycle **(1,51,61,81,91)** for children that can "grow" with the child. The bicycle comprises a frame (3,53,63,83,93) having a seat-tube (5). The frame has a front wheel (11), a rear wheel (13), a pair of handlebars (19), and a saddle (15) having a seat-post (17) for insertion into the seat-tube. The bicycle comprises a detachably mounted drivetrain (27) for releasable engagement of the frame to allow conversion of the bicycle to a balance bicycle or a pedal bicycle. Furthermore, the bicycle frame itself is height-adjustable to allow adjustment of the seat tube's (5) height above ground and reach-adjustable to allow adjustment of the distance between the saddle (15) and the handlebars (19). By providing such a bicycle, the bicycle will be convertible from a balance bicycle to a pedal bicycle and will also have a frame that is adjustable in height and reach. This bicycle will be suitable for a wide range of child heights and cycling abilities."

### GENERAL DESCRIPTION

The subject matter of the present specification refers to a front assembly for use with a rear module mountable thereto to form a riding vehicle, such a bicycle-type vehicle. The specification relates to a riding vehicle formed from said front assembly and a rear module. In particular, the riding vehicle may be assembled from the front assembly and a first rear module to form a first bicycle configuration. Moreover, the first rear module may be interchanged with a second rear module so as to form a second bicycle configuration. In this way, the presently disclosed riding vehicle may be converted between two or more differently configurations by mounting different rear modules to the front assembly.

**In** accordance with a first aspect of the presently disclosed subject matter, there is disclosed a front assembly for use with a rear module mountable thereto to form a riding vehicle, the rear module having a rear wheel rotatable on a wheel axle, and two laterally spaced apart connectors each having a front portion forwardly spaced from a respective side of the wheel axle and a rear portion via which the connector is mounted to a respective side of the wheel axle, the front assembly comprising:
an elongate frame;
a mount disposed beneath the elongate frame via which the rear module or a component associated with the rear module is securable to the elongate frame;
a head assembly associated with a front wheel at a lower end thereof and comprising a handlebar for steering the front wheel; and
a seat mounted relative to the elongate frame,
the elongate frame extending from the head assembly distally and terminating in two laterally spaced apart prongs, each prong being removably securable at least to a respective front portion of the connectors to facilitate mounting of the rear module to the front assembly to form a bicycle, wherein the two connectors, together with the elongate frame, constitute a bicycle frame of the bicycle.

**In** some embodiments, the spaced apart prongs are free of an ability to be secured directly to the wheel axle.

**In** some embodiments, an intermediate location of the elongate frame between the head assembly and the seat may comprise a hinge for folding the front assembly into a compact storage configuration.

In accordance with a second aspect of the presently disclosed subject matter, there is disclosed a riding vehicle comprising a front assembly in accordance with a first aspect of the presently disclosed subject matter, and a rear module.

In some embodiments, the rear module is constituted by a first rear module comprising a first rear wheel rotatable on a first wheel axle, and two laterally spaced apart first connectors at respective sides of the first wheel axle, each first connector having a first rear portion via which the first connectors are mounted to respective sides of the first wheel axle, and a first front portion forwardly spaced from the first wheel axle via which each first front portion is removably securable to a respective prong so that the two first connectors, together with the elongate frame, constitute a first bicycle frame of a first bicycle configuration, said first rear module being replaceable by a second rear module comprising a second rear wheel rotatable on a second wheel axle, and two laterally spaced apart second connectors at respective sides of the second wheel axle, each second connector having a second rear portion via which the second connectors are mounted to respective sides of the second wheel axle, and a second front portion forwardly spaced from the second wheel axle via which each second front portion is removably securable to a respective prong so that the two second connectors, together with the elongate frame, constitute a second bicycle frame of a second bicycle configuration, the second bicycle frame differing from the first bicycle frame.

In some embodiments, the first front portions of the first connectors and the second front portions of the second connectors may comprise identical prong engagement features operable to engage the prongs.

In some embodiments, the lateral spacing between the first connectors and the lateral spacing between the second connectors correspond with the lateral spacing between the prongs.

In some embodiments, in the first bicycle frame, at least the first front portion of each first connector is aligned with a respective prong; and in the second bicycle frame, at least the second front portion of each second connector is aligned with a respective prong, wherein the first front portion of each first connector and the second front portion of each second connector are located at different locations with respect to the axle of their respective first and second rear wheels.

The vehicle may have an imaginary base plane (e.g. the ground surface on which the vehicle is positioned) that is tangential to respective lowermost points of the front and rear wheels of the vehicle, wherein: the first rear portions are spaced above the plane by a first rear distance; the second rear portions are spaced above the plane by a second rear distance, the first and second rear distances differing to an extent which corresponds with a difference in radii between the two wheels.

In accordance with a third aspect of the presently disclosed subject matter, there is disclosed a riding vehicle that is convertible between a first and a second configuration, the riding vehicle comprising:
a front assembly comprising:
   an elongate frame;
   a head assembly associated with a front wheel at a lower end thereof and comprising a handlebar for steering the front wheel; and
   a seat mounted relative to the elongate frame; and
a rear module having a rear wheel rotatable on a wheel axle, the rear module being removably secured to the elongate frame and being constituted by one of the following modules which are interchangeably securable to the front assembly to convert the riding vehicle between the first and second configurations:
   a first rear module comprising a first rear wheel having a first radius and rotatable on a first wheel axle, and two laterally spaced apart first connectors at respective sides of the first wheel axle, each first connector having a first rear portion via which the first connectors are mounted to a respective side of the wheel axle, and a first front portion via which the first connectors are secured to the elongate frame; or
   a second rear module comprising a second rear wheel having a second radius and rotatable on a second wheel axle, the second radius being smaller than the first radius, and two laterally spaced apart second connectors at respective sides of the second wheel axis, each second connector having a second rear portion via which the second connectors are mounted to a respective side of the wheel axle, and a second front portion via which the second connectors are secured to the elongate frame.

In some embodiments, the vehicle has an imaginary base plane that is tangential to respective lowermost points of the front and respective rear wheels of the vehicle, wherein:
the first rear portions are spaced above the plane by a first rear distance;
the second rear portions are spaced above the plane by a second rear distance, the first and second rear distances differing to an extent corresponding to the difference in radii of the first and second rear wheels.

The front assembly and the first and second rear modules may constitute a part of a kit in which the rear modules are interchangeably securable to the front assembly to convert the riding vehicle between the first and second bicycle configurations. In some cases, the front assembly is provided with one of the rear modules already secured thereon, and other rear module provided separately.

In an example, one of the first and second bicycle configurations constitutes a pedal bicycle configuration and the other of the first and second bicycle configurations constitutes a balance bicycle configuration.

In some embodiments, a diameter of the rear wheel of the rear module used for the pedal bicycle configuration is greater than a diameter of the rear wheel of the rear module used for the balance bicycle configuration.

The riding vehicle may further comprise a mount associated with the elongate frame via which a respective rear module or component associated therewith is securable.

When the vehicle constitutes a balance bicycle configuration, the vehicle may further comprise a shell at least partially encasing the mount. **In** certain examples, each side of the shell may comprise a laterally protruding footrest.

When the vehicle constitutes a pedal bicycle configuration, the corresponding rear module may further comprise:
a chain drive disposed at one side of the corresponding rear wheel;
two pedals operable to drive said rear wheel via the chain drive; and
a chain cover covering at least part of the chain drive, the chain cover having a rearward end associated with the corresponding wheel axle, and a forward end from which a first of the two pedals laterally extends.

**In** some embodiments, the rearward end of the chain cover may comprise the rear portion of the corresponding connector located on the same side of the rear wheel, wherein the front portion of that connector is located between the forward and rearward ends of the chain cover.

**In** certain embodiments, the chain cover and the corresponding connector constitute a unitary body.

The chain cover may constitute a first casing part, wherein the corresponding rear module further may comprise a second casing part disposed at a side of the corresponding rear wheel which is free of the chain drive, the second casing part having a rearward end associated with the corresponding wheel axle and a forward end from which a second of the two pedals laterally extends.

In some embodiments, the rearward end of the second casing part comprises the rear portion of the corresponding connector located on the same side of the rear wheel and the front portion of that connector is located between the forward and rearward ends of the second casing part.

It is considered that the second casing part and the corresponding connector may constitute a unitary body.

The forward end of the chain cover and the forward end of the second casing part may be secured at least indirectly to the elongate frame and, optionally, are secured to one another.

In some examples, the secured forward ends of the chain cover and the second casing part define therebetween a recess receiving at least a part of the mount.

The vehicle may further comprise a seat-supporting post having an upper end to which the seat is mounted.

When the vehicle constitutes at least a balance bicycle configuration, the mount may at least partially engage the lower portion of the post.

According to a fourth aspect of the presently disclosed subject matter, there is provided a riding vehicle that is convertible between a balance bicycle configuration and a pedal bicycle configuration, the riding vehicle comprising:
a front assembly comprising:
   an elongate frame associated with a mount;
   a head assembly associated with a front wheel at a lower end thereof and comprising a handlebar for steering the front wheel; and
   a seat mounted relative to the elongate frame; and
a rear module having a rear wheel rotatable on a wheel axle, the rear module being removably secured to the front assembly and constituted by one of the following:
   a first rear module operable in the pedal bicycle configuration and having a first rear wheel rotatable on a first wheel axle, a chain drive disposed at a first side of the first rear wheel and two pedals for driving the first rear wheel via the chain drive; or
   a second rear module operable in the balance bicycle configuration and having a second rear wheel rotatable on a second wheel axle,
the first and second rear modules being interchangeably securable to the elongate frame to convert the riding vehicle between the pedal and balance bicycle configurations, respectively, wherein
the first rear module at least partially encases said mount in the pedal bicycle configuration; and
in the balance bicycle configuration, the vehicle comprises at least one component which at least partially encases the mount, said at least one component being forward of the second rear module.

The at least one component may comprise a shell securely and detachably mountable to the mount so as to at least partially encase the mount in the balance bicycle configuration. In certain examples, each side of the shell comprises an outwardly protruding footrest at a lower end thereof.

In some embodiments, the first rear module further comprises a chain drive cover covering at least part of the chain drive, the chain cover having a rearward end associated with the first wheel axle, and a forward end from which a first of the two pedals laterally extends.

The chain drive cover may constitute a first casing part, and the first rear module may further comprise a second casing part disposed at a side of the first rear wheel which is free of the chain drive, the second casing part having a rearward end associated with the first wheel axle and a forward end from which a second of the two pedals laterally extends, the first and second casing parts forming a chain drive casing.

In some embodiments, the forward end of the chain cover and the forward end of the second casing part may be secured to said mount and, optionally, to one another. **In** a particular example, the secured forward ends of the chain cover and the second casing part may define therebetween a recess receiving at least a part of the mount.

The vehicle may further comprise a seat-supporting post having an upper end to which the seat is mounted above the elongate frame and a lower portion configured to extend at least partially through the elongate frame.

The mount may be disposed beneath the elongate frame such that, when the vehicle is in at least the bicycle configuration, the post is at least partially received by the mount.

In some embodiments, a height of the seat relative to the elongate frame is adjustable so that when the seat is disposed in a lowermost position, the lower portion of the post projects downwardly from the elongate frame to a maximal extent.

In some embodiments, the shell encases at least a majority of the lower portion of the post when the lower portion projects downwardly from the elongate frame to a maximal extent.

The elongate frame may be lockably foldable between:
a riding state, in which the front wheel is in line with the rear wheel of the respective rear module secured to the front assembly; and
a stowed state in which the front wheel is adjacent and parallel to the rear wheel of the respective rear module secured to the front assembly.

In certain examples, an intermediate portion of the elongate frame between the head assembly and the seat is foldable such that when the vehicle is folded to the stowed state, the front wheel is aligned with the rear wheel of the respective rear module.

The vehicle may further comprise a latch operable to selectively lock the vehicle in the riding and stowed states, the latch being substantially flush with the elongate frame when the vehicle is locked in at least the riding state. In certain embodiments, the upper end of the head assembly is at least partially collapsible so as to fold the handlebar downwardly towards the front wheel.

The vehicle may further comprise a brake mechanism for braking the front wheel, the brake mechanism being at least partially housed within the head assembly.

In some embodiments, the lower end of the head assembly comprises laterally opposed front prongs which extend downwardly toward respective sides of a front axle of the front wheel, the brake mechanism comprising laterally opposed brake pads for squeezing therebetween a rim of the front wheel for braking thereof, each brake pad extending toward the rim from a respective front prong.

In some embodiments, each of the front prongs comprises an internally facing recess in which at least a part of the brake pad is received.

In some embodiments, the first rear module comprises connectors that extend forwardly of the first wheel axle by a distance that is less than a radius of the first rear wheel.

In some embodiments, the second rear module comprises connectors that extend forwardly of the second wheel axle by a distance that is less than a radius of the second rear wheel.

In some embodiments, the mount is located axially below the seat, at least indirectly. In an example, the seat is mounted on the frame of the front assembly, and the mount is located underneath the frame, substantially aligned with seat position.

### BRIEF DESCRIPTION OF THE DRAWINGS

In order to better understand the subject matter that is disclosed herein and to exemplify how it may be carried out in practice, embodiments will now be described, by way of nonlimiting example only, with reference to the accompanying drawings, in which:
Fig. 1 is a side perspective view of a riding vehicle according to embodiments of the present subject matter, the riding vehicle shown configured as a balance bicycle formed from a front assembly and a rear module;
Fig. 2A is a side view of the riding vehicle of Fig. 1, the front assembly and rear module shown disengaged from one another;
Fig. 2B is a side perspective view of the rear module of Fig. 2A;
Fig. 3 is a side perspective view of the front assembly of Fig 2A;
Fig. 4 is a rear perspective view of the front assembly of Fig. 2A;
Fig. 5 is a partially transparent side perspective view of a rear portion of the riding vehicle of Fig. 1;
Fig. 6A is a close-up view of an underside of the front assembly of Fig. 2A at a location where a seat post extends through a mount of the riding vehicle;
Fig. 6B is a top perspective view of a component configured to at least partially encase the mount and seat post shown in Fig. 6A;
Fig. 7 is a partially transparent side perspective view of the riding vehicle of Fig. 1 showing the mount and seat post encased by the component of Fig. 6B;
Fig. 8 is a front perspective view of the front assembly of Fig. 3, wherein a seat and handlebar height have been raised so as to configure the front assembly for use with a rear module to form a riding vehicle of a different configuration to that shown in Fig. 1;
Fig. 9 is a side view of the front assembly of Fig. 8, along with a rear module that is mountable to the front assembly such that, together, the front assembly and rear module form a riding vehicle that is configured as a pedal bicycle;
Fig. 10 is a front perspective view of the front assembly and rear module of Fig. 9 assembled together to form a riding vehicle in the form of a pedal bicycle;

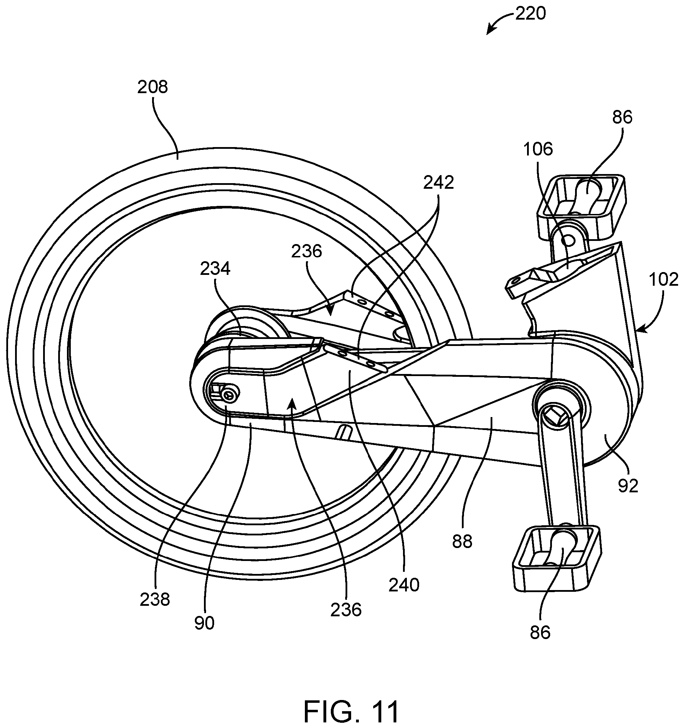

Fig. 11 is a side perspective view of the rear module of Fig. 9;
Fig. 12 is a top perspective view of the rear module of Fig. 9;
Fig. 13 is a partially transparent side perspective view of the riding vehicle of Fig. 10;
Fig. 14A is a side view of the rear module of Fig. 2A;
Fig. 14B is a side view of the rear module of Fig. 9;
Figs. 15A and 15B are partially transparent cross-sectional and respective side perspective views of the rear module of Fig. 9 taken along plane X-X' of Fig. 10;
Fig. 16 is a partially transparent side perspective view of a rear portion of the riding vehicle of Fig. 10;
Fig. 17 is a side view of a riding vehicle configured as a balance bicycle according to the presently disclosed subject matter, wherein an elongate frame and handlebar of the vehicle are partially folded;
Fig. 18 is a side view of the riding vehicle of Fig. 17 wherein the elongate frame and handlebar have been folded such that the riding vehicle assumes a stowed state; and
Fig. 19 is a side view of a riding vehicle configured as a pedal bicycle according to the presently disclosed subject matter, wherein the elongate frame and handlebar of the vehicle are folded such that the riding vehicle assumes a stowed state.

### DETAILED DESCRIPTION OF EMBODIMENTS

Disclosed herein is a riding vehicle. The riding vehicle may generally be in the form of a bicycle. For example, the riding vehicle may be in the form of a bicycle having pedals via which one can manually power the bicycle. The riding vehicle may also be in the form of a balance bicycle, a type of riding vehicle that young children may ride prior to learning how to pedal a bicycle, or as an alternative to a pedal bicycle. Balance bicycles are often sized such that when ridden, at least one if not both of the rider's feet can contact the ground so that the rider can push off the ground to power the balance bicycle.

The presently disclosed riding vehicle comprises a front assembly and a rear module that is mountable to the front assembly. For example, the riding vehicle may be formed by assembling the front assembly and the rear module together. **In** certain embodiments, the front assembly can comprise generally forward portions of a bicycle, such as a front wheel, handlebars, and at least a front portion of a bicycle frame. The rear module can comprise generally rearward portions of a bicycle, such as a rear wheel thereof, with connectors extending therefrom. The front assembly and rear module may thus be connected or engaged with one another so that together, the front assembly and rear module substantially form a riding vehicle. For example, the front assembly and rear module may be configured such that when assembled together, they form a balance bicycle. The front assembly and rear module may also be configured such that when assembled together, they form a pedal bicycle. **In** certain embodiments, it is envisaged that two or more different rear modules may be interchangeably mountable to the front assembly so as to form differently configured riding vehicles. For example, a first rear module might be configured such that when secured to the front assembly, a balance bicycle is formed. A second rear module might be configured such that when secured to the front assembly, a pedal bicycle is formed.

Of course, the ability to interchangeably secure each of two or more differently configured rear modules to the front assembly need not be limited to conversion between a balance bicycle and a pedal bicycle. For example, the respective rear modules may be differently configured by, for example, varying the rear wheel size, varying the number of rear wheels, varying whether there are footrests, varying whether there is a chain drive, and so on. For example, one rear module may have a rear wheel having a first diameter, whereas another rear module may have a rear wheel having a second diameter that is different from the first diameter. In this way, one could readily change the size of the rear wheel of the resulting riding vehicle simply by swapping out one rear module for another. While the present specification is primarily directed towards riding vehicles in the form of a bicycle, it will be appreciated that other riding vehicles, such as tricycles or bicycles with training wheels are also considered within the scope of the present specification. For example, one rear module might comprise a main rear wheel as well as a pair of laterally disposed training wheels so that when connected to the front assembly, the riding vehicle is in the form of a bicycle with a pair of rear training wheels. Another rear module might comprise two spaced apart rear wheels such that, when the rear module is mounted to the front assembly, the resulting riding vehicle is in the form of a tricycle. The presently disclosed riding vehicle may thus take a number of different configurations based on the configuration of the rear module that is mounted to the front assembly. In this way, the resulting riding vehicle formed by the front assembly and a rear module may comprise, for example, a pedal bicycle, a balance bicycle, a tricycle, and a bicycle with training wheels.

Some of the potential advantages of an interchangeable, modular riding vehicle as described may include the following: when a rider transitions from a balance bike to a pedal bike, instead of discarding the balance bike and purchasing a pedal bike, the same front assembly can be used, potentially reducing waste, costs involved in the purchase of a separate bike, and as such. Also, using the same front assembly in all configurations of the vehicle may facilitate the change for the child user who may be accustomed to the general vehicle structure. Also, using the same front assembly with different rear modules can allow for more compact storing, e.g. as compared to the storage space occupied by two separate riding vehicles. Also, the interchangeability can allow quickly converting from one bike configuration to the other, while being able to easily return to the first configuration if needed.

In at least one embodiment, the rear module has a rear wheel that is rotatable on a wheel axle, and two laterally spaced apart connectors. Each connector is associated with a respective side of the wheel axle and is configured to facilitate securement of the rear module to the front assembly. For example, each connector may extend generally forward of the axle of the rear wheel and comprise engagement features via which each connector can be releasably engaged with the front assembly so as to form the riding vehicle.

In at least one embodiment, each connector comprises a front portion which is forwardly spaced from a respective side of the wheel axle, and a rear portion via which the connector is mountable to a respective side of the wheel axle. In this way, a rear end of each connector is secured to a respective side of the wheel axle such that each connector projects forwardly therefrom, terminating in a respective front end of the connector. The front end or portion of each connector is configured for lockably securing the rear module to the front assembly so as to form a resulting riding vehicle.

The front assembly may comprise a front wheel of the riding vehicle, along with a generally elongate frame. For example, the elongate frame may constitute at least part, if not a substantial part, of a bicycle frame of a resultant bicycle configuration formed by the front assembly and the rear module. The front assembly may also comprise a head, head member, head portion, or head assembly associated with components generally toward a front of a bicycle-type riding vehicle. For example, a lower end of the head assembly may be associated with the front wheel of the riding vehicle. An upper end of the head assembly may comprise or be associated with a handlebar. **In** this way, the head assembly constitutes a forward portion of the front assembly and is configured to facilitate steering of the front wheel of the riding vehicle via the handlebar.

**In** at least one embodiment, the front assembly also comprises a seat that is mounted relative to the elongate frame. For example, the seat may be mounted directly or indirectly to the elongate frame of the front assembly. During use when a rider is seated upon the seat, the seat is configured not to move relative to the elongate frame, thereby providing the rider with a stable surface upon which to sit. As will be discussed, a height of the seat above the elongate frame may be adjustable. Adjustment of the seat facilitates can provide greater riding comfort for differently sized riders. Adjustment of the seat may also accompany and/or facilitate conversion of the riding vehicle from one configuration (e.g., a balance bicycle configuration) to another (e.g., a pedal bicycle configuration).

The elongate frame of the presently disclosed front assembly may extend from the head assembly distally. That is to say, the elongate frame may extend generally rearwardly relative to the head assembly. The rearwardly extending elongate frame may terminate in two laterally spaced apart prongs. For example, the prongs may be configured and spaced from one another so as to receive at least a part of the rear wheel therebetween. In other words, each distal prong of the elongate frame may extend along either side of a portion of the rear wheel, without directly contacting the rear wheel, so as to ensure the rear wheel is free to rotate. The prongs can together form a distally extending fork shape.

In at least one embodiment, each prong of the elongate frame is configured to be removably secured to a respective connector of the rear module. For example, each prong may be releasably engaged with a respective front portion of each connector. As such, the connectors of the rear module are securable to the prongs at the distal end of the elongate frame so as to facilitate mounting of the rear module to the front assembly to form a riding vehicle that may be in the form of a bicycle (such as a balance bicycle or a pedal bicycle). In this way, the two forwardly extending connectors of the rear module, together with the elongate frame of the front assembly, constitute a bicycle frame of the resulting bicycle formed by engagement of the rear module and the front assembly. Put another way, the rearwardly extending elongate frame of the front assembly and the forwardly extending connectors of the rear module connect together to form a generally continuous bicycle frame of the riding vehicle. The prongs are not engageable with the axle of the rear wheel per se, and instead are configured for releasable engagement with a respective forwardly extending connector of the rear module. In particular, each prong is configured for attachment to a front portion of a respective connector of the rear module so as to facilitate formation of the bicycle-type riding vehicle.

As discussed, the riding vehicle may be formed by engagement between the front assembly and a rear module. In particular, two or more differently configured rear modules may be interchangeably secured to the front assembly so as to form differently configured riding vehicles. For example, the rear module may be constituted by a first rear module which is securable to the front assembly to form a first bicycle configuration. The first rear module may be replaced by a second rear module which is securable to the front assembly to form a second bicycle configuration that is different from the first bicycle configuration. For example, one of the bicycle configurations may comprise a balance bicycle configuration, whereas the other may comprise a pedal bicycle configuration.

The first rear module may comprise a first rear wheel rotatable on a first wheel axle, and two laterally spaced apart first connectors at respective sides of the first wheel axle, the connectors being configured for engaging respective prongs of the elongate frame. Each of the first connectors may have a first rear portion via which the first connectors are mounted to respective sides of the first wheel axle. Each connector extends generally forwardly from respective sides of the first wheel axle and terminates in a respective first front portion, each first front portion being removably securable to a respective prong of the elongate frame to facilitate formation of the first bicycle configuration. **In** this first bicycle configuration, the two first connectors, together with the elongate frame, constitute a first bicycle frame of the first bicycle configuration.

As previously discussed, the first rear module is replaceable by a second rear module. **In** particular, the first rear module is selectively detachable from the front assembly by disconnecting the first connectors from the elongate frame, thereby making the prongs of the elongate frame available for connection to another rear module such as the second rear module. The second rear module may comprise a second rear wheel that is rotatable on a second wheel axle, and two laterally spaced apart second connectors at respective sides of the second wheel axle, the connectors being configured for connecting to respective prongs of the elongate frame. Each second connector may have a second rear portion via which the second connectors are mounted to respective sides of the second wheel axle. Each second connector extends generally forwardly from respective sides of the second wheel axle and terminates in a respective second front portion, each second front portion being removably securable to a respective prong of the elongate frame to facilitate formation of the second bicycle configuration. **In** this second bicycle configuration, the two second connectors, together with the elongate frame, constitute a second bicycle frame of the second bicycle configuration, the second bicycle frame differing from the first bicycle frame.

The removable attachment of the rear module to the front assembly is generally constructed so that the user (e.g. a parent) can easily release and connect the module relative to the front assembly, with minimal to no need for tools. The removable attachment can be free of screws, rivets, nails, anchors and as such, which require force to applied thereto and/or require designated tools for their assembly and disassembly. The removable attachment of the rear module can include snap-fit mechanisms, push mechanisms, lever or latch activated mechanisms, spring-loaded mechanisms or other suitable mechanisms. In some cases, the removable attachment requires just a single movement or actuation by the user.

In some embodiments, the modular riding vehicle can comprise components that include reinforcing inserts or other reinforcing elements. Optionally, the reinforcing elements are formed of metal (e.g. aluminum). These reinforcing elements may be incorporated into various parts of the vehicle, including, for example, the head assembly (for example, the front prongs of the head assembly), portions of the elongate frame, and/or portions of the rear module. In some cases, components may be formed of plastic material that is molded around the metal inserts, such as through an overmolding process, in which plastic material is injected over the metal reinforcements to create a composite structure. This construction may be advantageous (over, for example, all-metal components) in that the components are relatively lightweight, yet, due to the metal reinforcements, are able to withstand the forces encountered during use of the riding vehicle. In some examples, the reinforcing elements are located at central positions of the frame, at attachments or joints between components, extending along elongate portions of the frame, or otherwise incorporated within components of the riding vehicle.

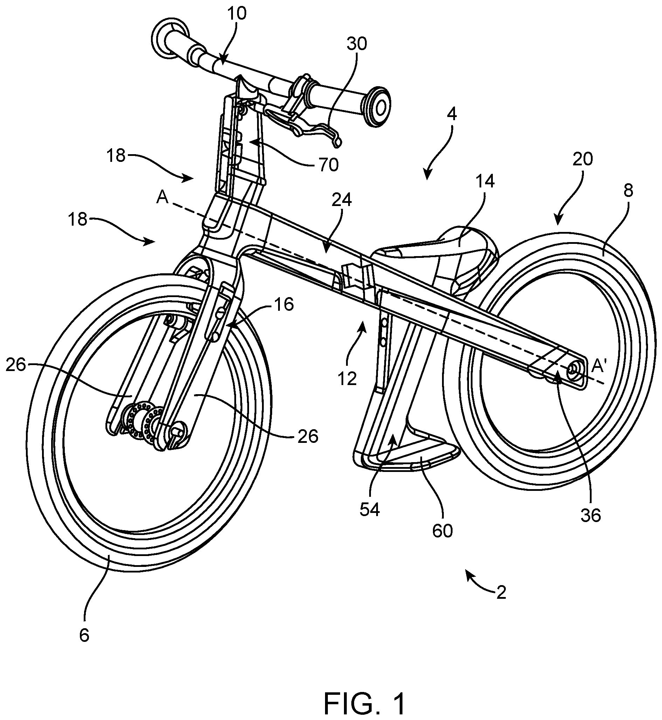

Fig. 1 shows a riding vehicle 2 according to embodiments of the present subject matter. The depicted riding vehicle 2 is configured as a balance bicycle 4 suitable for young children to ride on. The depicted balance bicycle 4 comprises front and rear wheels 6, 8, though does not comprise a chain or pedals via which the rider can drive the rear wheel 8. The balance bicycle 4 also comprises other features common in bicycle-type riding vehicles, including: a handlebar 10 via which a rider can steer the front wheel 6, a main bicycle frame 12, and a seat 14 upon which the rider can sit. In the depicted balance bicycle configuration 4, the seat 14 is shown lowered to a minimum height such that it sits on or is very close to a top of the bicycle frame 12. As will be discussed, a height of the seat 14 may be adjusted to suit different rider sizes, and also to facilitate conversion of the riding vehicle 2 into one or more different bicycle configurations. The depicted balance bicycle 4 also comprises a braking mechanism 16 via which a rider can slow or stop the riding vehicle's 2 motion of travel during use.

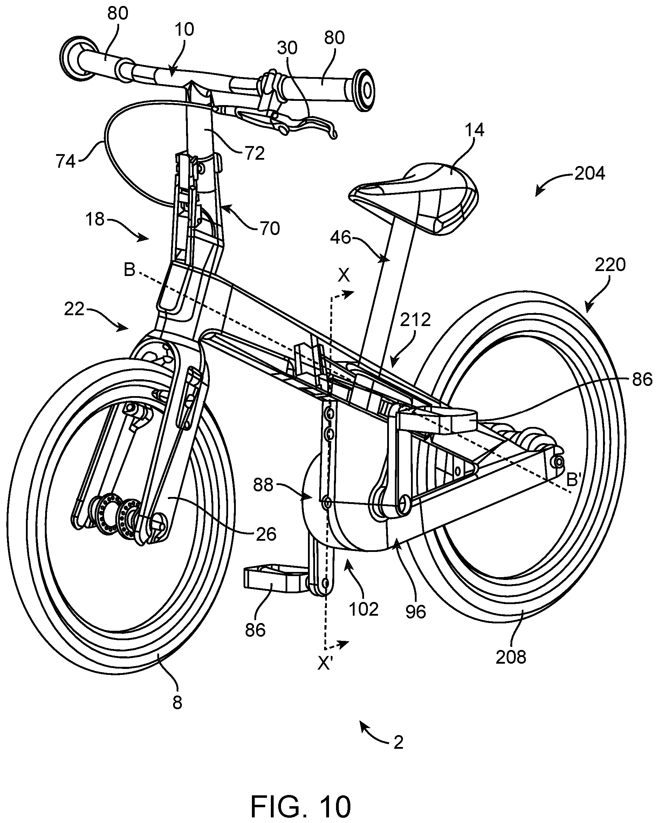

The balance bicycle 4 comprises a front assembly 18 and a balance bicycle rear module mounted thereto 20. As will be discussed, the balance bicycle rear module 20 may be detached or otherwise removed from the front assembly 18, and replaced by another type of rear module, such as a pedal bicycle rear module 220, so as to configure the riding vehicle 2 as a pedal bicycle 204, as shown in Fig. 10. For simplicity, the balance bicycle rear module 20 may also be referred to herein as a balance module, balance bicycle module, rear balance module, rear module, and the like.

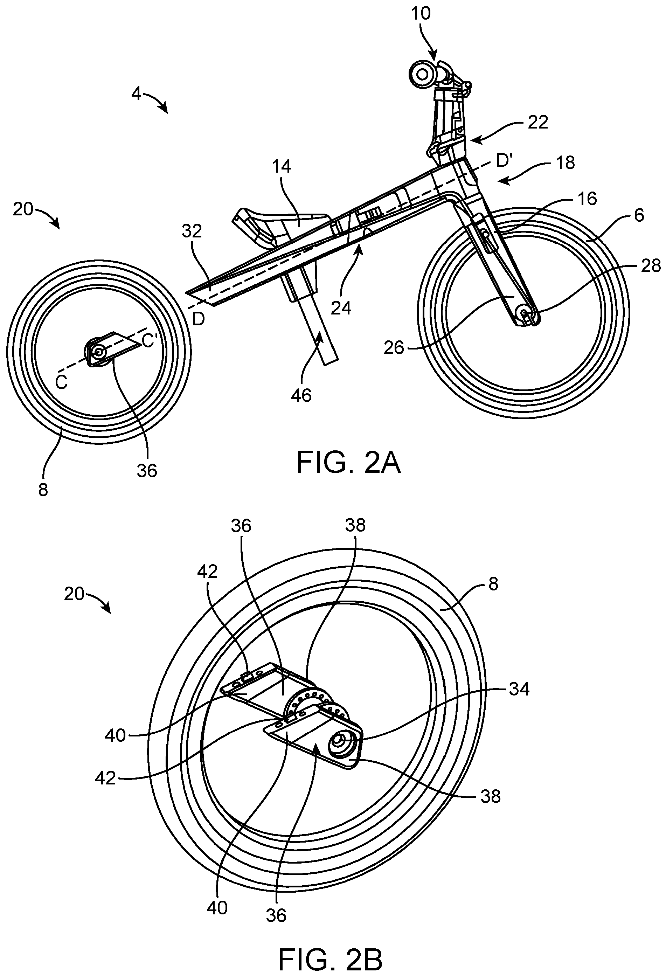

Fig. 2A shows the balance bicycle 4 of Fig. 1 in a disassembled state. **In** particular, two primary constituents of the balance bicycle 4 are shown separated from one another, being the front assembly 18 of the riding vehicle 2, and the rear module 20 of the riding vehicle 2. The front assembly 18 comprises a head assembly 22 and an elongate frame 24 extending rearwardly therefrom. A lower end of the head assembly 22 is associated with the front wheel 6 of the balance bicycle 4, the head assembly 22 further comprising the handlebar 10 for steering the front wheel 6. **In** the depicted embodiment, the lower end of the head assembly 22 comprises a pair of laterally disposed front prongs 26 which receive therebetween the front wheel axle 28 and the front wheel 6 which rotates thereon. The head assembly 18 thus refers to certain features of the riding vehicle 2 that are generally forward of a seated rider and includes the handlebar 10 for steering the front prongs 26 and thus the front wheel received therebetween. The head assembly 22 may also at least partially include the braking mechanism 16, such as a hand-operated front brake 30 for braking the front wheel 6.

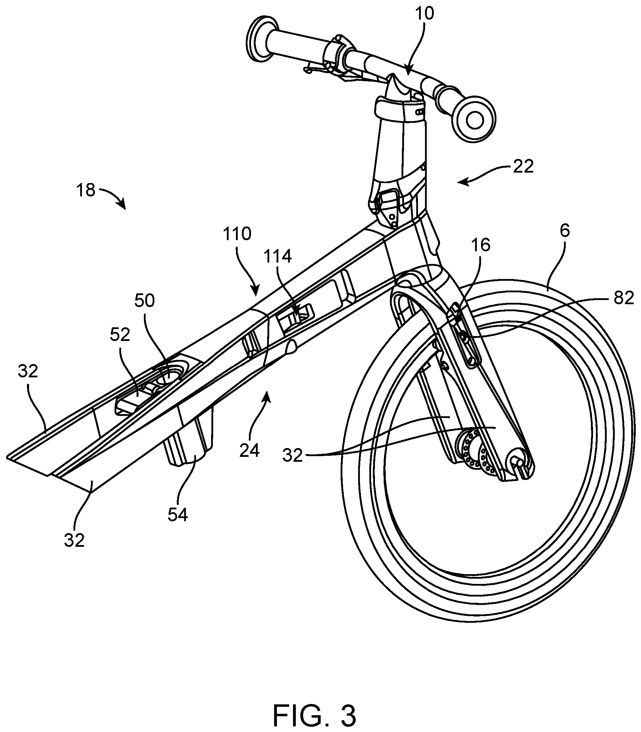

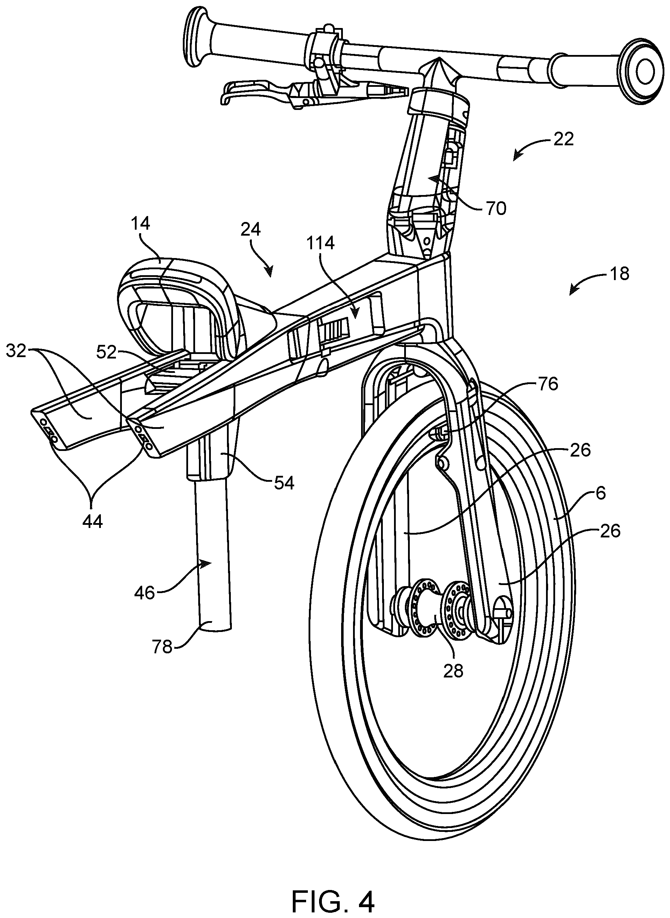

Extending rearwardly from the head assembly 22 is the elongate frame 24 of the front assembly 18. The elongate frame 24 forms a substantial part of the structural body of the riding vehicle 2. **In** use, a rider would generally straddle the elongate frame 24 with one leg on each side thereof. The elongate frame 24 is also shown in Figs. 3 and 4 and it can be seen that the frame extends distally from the head assembly 22, the frame 24 terminating in a pair of laterally spaced apart prongs 32. As will be discussed, the prongs 32 are generally identical to one another and a lateral spacing between the opposed prongs 32 is sized to receive therebetween at least a portion of a rear wheel of a rear module so that the rear wheel can rotate freely. Each prong 32 is configured to engage respective connectors of the rear module so as to facilitate mounting of the rear module to the front assembly 18 in order to form a riding vehicle 2 of a desired configuration (e.g., such as a balance bicycle or a pedal bicycle).

An example balance module 20 is shown in Fig. 2B. The rear module 20 comprises a rear wheel 8 which is rotatable on a rear wheel axle 34, and two laterally spaced apart connectors 36 which are configured to secure to the elongate frame 24 of the front assembly 18. Each connector 36 is disposed on a respective side of the rear wheel 8 and extends generally forwardly from the wheel axle 34 so as to be alignable with and securable to the rearwardly extending prongs 32 of the elongate frame 24 of the front assembly 18. When the connectors 36 are secured to the prongs 32 of the elongate frame 24, it can be said that the connectors 36 and the elongate frame 24 together form the bicycle frame of the resulting bicycle configuration. In the depicted embodiment, when the balance module 20 is connected to the front assembly 18, the corresponding connectors 36 and the elongate frame 24 together form what can be referred to as the bicycle frame 12 of the balance bicycle 4. In other words, when the front assembly 18 and the rear module 20 are not secured to one another, the bicycle frame of the riding vehicle 2 is not yet formed and is incomplete; it is by engaging the connectors of the rear module to the elongate frame 24 of the front assembly 18 that the bicycle frame of the riding vehicle 2 is formed.

In the depicted balance module 20, each connector 36 can be considered to constitute a rearmost tip or end of the bicycle frame 12 of the resulting balance bicycle 4. Put another way, when the rear module 20 and front assembly 18 are connected to one another, each connector 36 of the rear module 20 can be thought of as an extension of a respective prong 32 of the elongate frame 24, so as to complete the bicycle frame 12 of the balance bicycle configuration 4. In this way, the elongate frame 24 forms a substantial proportion of the resulting bicycle frame 12, whereas the connectors 36 of the rear module 20 simply form a distal tip or end of the entire bicycle frame 12. As such, the connection between the elongate frame 24 and the rear module 20 occurs at a distal end portion of the bicycle frame 12, as opposed to a more prominent or major point therealong (e.g., such as a midpoint) which could compromise the stability and strength of the bicycle frame 12.

In at least one embodiment, a lateral spacing between the connectors generally corresponds to a lateral spacing between the prongs of the elongate frame. Additionally, an angle at which each connector extends forwardly from the rear wheel axle (relative to a horizontal base or ground plane) substantially corresponds to an angle at which the elongate frame and/or prongs thereof project rearwardly, such that when the connectors are secured to the prongs, the resulting bicycle frame is substantially continuous and comprises a longitudinal axis which extends through the elongate frame and the connectors which are aligned therewith (e.g., see the dashed line A-A' in Fig. 1 and B-B' in Fig. 10). In the depicted embodiment, each connector 36 comprises a rear portion 38 via which the connectors 36 are mounted to respective sides of the rear wheel axle 34. From the rear portion 38, each connector 36 extends linearly in a generally forward and upward direction (see dashed line C-C' of Fig. 2A) so as to align with the rearwardly and downwardly extending elongate frame 24 and prongs 32 thereof (see the dashed line D-D' in Fig. 2A). Each connector 36 extends a relatively short distance such that, when viewed from the side, as in Fig. 2A, the connectors 36 do not extend beyond a rim of the rear wheel 8. In the depicted embodiment, a length of each connector 36 is approximate to or less than about half of the radius of the rear wheel 8. In this way, when securing the rear module 20 to the front assembly 18, the prongs 32 of the elongate frame 24 are configured to extend around opposite sides of, for example, a forward upper quadrant of the rear wheel 8 such that the wheel 8 can be accommodated in the space between the prongs 32.

Each connector 36 of the rear module 20 extends forwardly from the rear wheel axle 34 and terminates in a respective front portion 40 which is configured to engage a respective prong 32 of the elongate frame 24. For example, each front portion 40 may comprise prong engagement features 42 operable to engage the prongs 32. The prongs 32 may also have corresponding or complementary connector engagement features 44 operable to engage the connectors 36. For example, the front portion 40 or face of each connector 36 may comprise projections, tongues, grooves, slots etc., while the distal end or face of each prong 32 may comprise complementary and/or cooperating features for engagement with those of the connectors. It is envisaged that any number of different connection mechanisms may be provided to facilitate the releasable engagement between the connectors and the prongs of the elongate frame. In yet another example, the connectors and respective prongs may engage one another telescopically. For example, the distal end of the prongs may be slotted into a corresponding opening in a front portion of a respective connector. The connection mechanism may also comprise latches, levers and the like. It is envisaged that the connection mechanism is one which achieves a strong and secure connection between the front assembly and the rear module, which securement is releasable with relative ease, preferably without requiring the use of additional tools or fixing components. In this way, one can simply and manually bring the connectors toward the respective prongs for engagement therewith (e.g., by urging the connectors toward, into or against the respective prongs). Correspondingly, if the rear module is to be detached from the front assembly, one may, for example, actuate a lever, press a quick release button, and the like, so as to easily disengage the rear module from the prongs of the elongate frame with minimal or no requirement of tools.

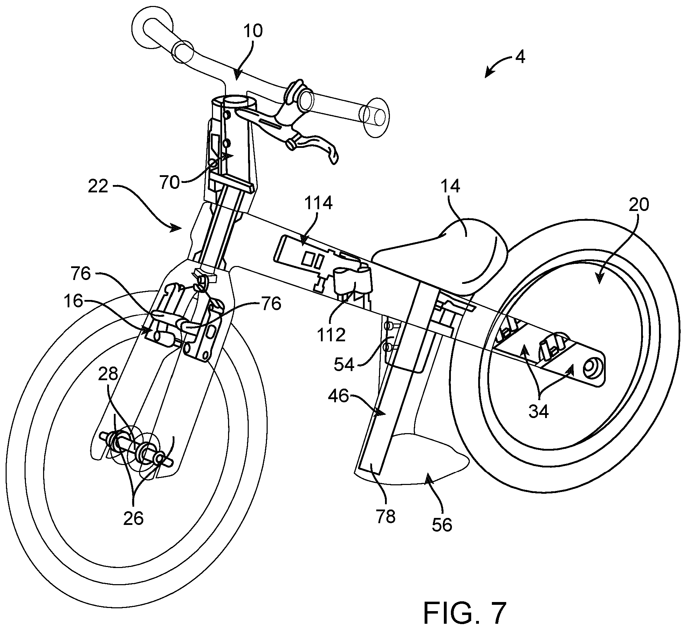

The front assembly 18 of the riding vehicle 2 also comprises a seat 14 upon which a rider can sit during use. The seat 14 is mounted relative to the elongate frame 24. In the depicted embodiment, the seat 14 is mounted toward the distal prongs 32 of the frame 24, forward thereof. For example, the seat 14 may be mounted directly or indirectly to the frame 24, which mounting fixes the position of the seat 14 relative to the elongate frame 24 so that the seat 14 is stable and does not move during riding of the riding vehicle 2. The depicted riding vehicle 2 comprises a seat-supporting post 46 having an upper end 48 to which the seat 14 is mounted (see Fig. 7). The post 46 is securable relative to the elongate frame 24 such that the seat 14 is disposed thereabove. In the balance bicycle configuration 4, the seat 14 may be lowered to a minimum height wherein the post 46 extends below the elongate frame 24 to a maximal extent, as shown in Fig. 2. Of course, a height of the seat 14 above the elongate frame 24 may be adjusted as needed to suit the rider.

Referring to Fig. 3, a rearward segment of the elongate frame 24 is provided with means for height adjustably securing the seat 14 relative to the frame 24. To this end, the elongate frame 24 comprises a downwardly extending channel 50 situated at a 'base' or forward end of the two distal prongs 32. The post 46 of the seat 14 is receivable through the channel 50 and may be selectively locked in place via operation of manual height adjustment means, such as a latch or lever 52. Of course, other known mechanisms for adjusting seat height are within the scope of the present specification and may be utilised by embodiments of the present riding vehicle 2 to facilitate manually operable seat height adjustment.

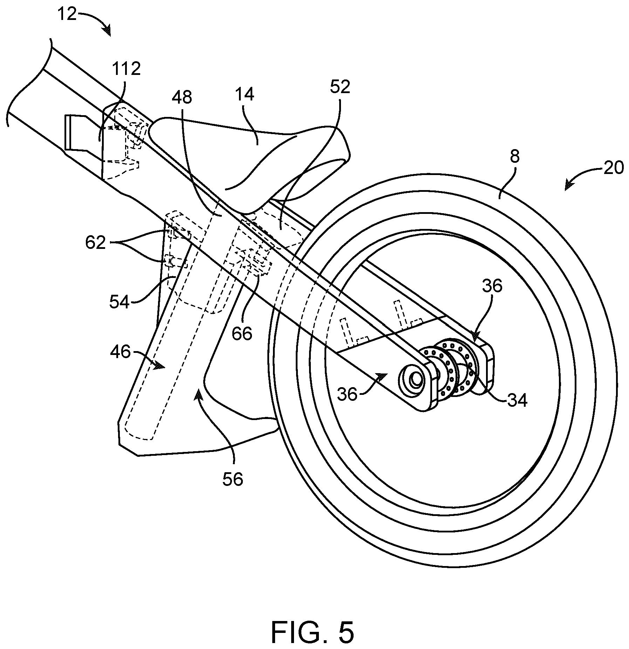

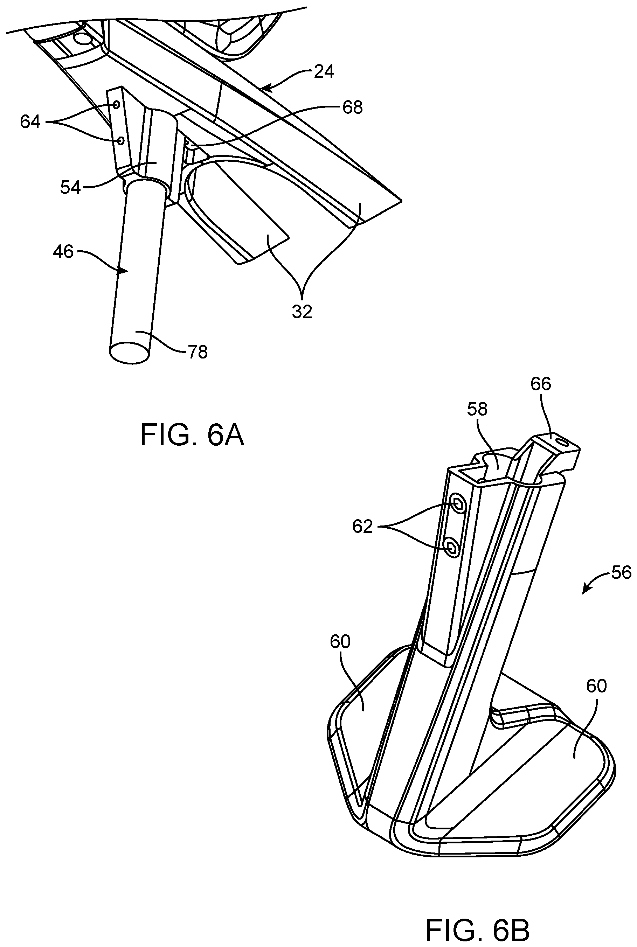

At least one embodiment of the presently disclosed riding vehicle also comprises a mount. The mount is generally disposed beneath a rearward segment of the elongate frame, for example, at a position corresponding with the seat. In certain embodiments, the mount may be integrally formed with the elongate frame. Of course, the mount may also constitute a component that is separate from the elongate frame. As will be discussed, the mount is operable to facilitate configuring of the riding vehicle into a desired balance bicycle configuration. Referring also to Figs. 5 and 6A, the depicted mount 54 comprises a body defining an internal channel. The channel of the mount is aligned with and beneath the aforementioned channel 50 of the elongate frame 24. As such, in the balance bicycle configuration 4 wherein it may be desirable to have the seat 14 in a lowermost state, the seat post 46 can extend through both of the aligned channels such that at least a portion or segment of the seat post 46 extends through and below the mount 54. In this way, the mount 54 may help to further secure a location of the seat 14 relative to the elongate frame 24. In certain embodiments, the mount 54 may comprise means for releasably fixing the seat post 46 relative to the mount 54. In yet other embodiments, the post 46 may simply slide freely within the channel of the mount 54. In at least one embodiment, the mount 54 is configured to facilitate assembly of the front assembly and the rear module. For example, the mount may facilitate configuring of the riding vehicle as a balance bicycle. As will be discussed, the mount may also facilitate configuring of the riding vehicle as a pedal bicycle.

Referring also to Figs. 6B and 7, when the riding vehicle 2 is to be configured as a balance bicycle 4, the riding vehicle 2 further comprises a component which may be in the form of a shell 56. The shell 56 is configured to at least partially encase the mount 54 and/or the portion of the seat post 46 which extends through the mount 54. In the depicted embodiment, the shell 56 substantially encases both the mount 54 and the downwardly extending post 46, as shown in Fig. 1. Referring to Fig. 2 wherein the shell 56 has been removed, the exposed seat post 46 may represent a safety hazard to the rider; such posts is often metallic and may be inadvertently contacted by the rider's feet or legs as they push off the ground to drive the balance bicycle 4. Indeed, without the shell 56 mounted over the post 46, there may be too large a space between the rear wheel 8 and the post 46 in which a rider's feet or legs may inadvertently enter, thereby risking inadvertent contact between the rider's feet or legs and the rear wheel 8. This can be dangerous, particularly if the balance bicycle 4 is in motion. As such, the shell 56 is shaped and sized not only to cover the post 46, but to also occupy a space in front of the rear wheel 8 to obstruct a rider's feet or legs from otherwise entering said and contacting the rear wheel 8. To this end, the shell 56 constitutes a housing having an internal cavity 58 shaped and sized such that an upper end of the shell 56 encases around the mount 54, and a lower end of the shell 56 encases at least a lower end of the seat post 46 even when the seat post 46 is lowered to a maximal extent, as shown in Fig. 7. Additionally, a lower end of each side of the shell 56 is provided with a laterally projecting platform which functions as a footrest 60. The shell 56 with its laterally projecting footrests 60 helps prevent the rider's feet from contacting one another beneath the elongate frame 24 or the rear wheel 8, which contact may pose a safety hazard. Advantageously, if a rider picks up sufficient speed such that the balance bicycle 4 can travel without needing one or both feet to balance, the rider can simply rest their feet upon the footrests 60 of the shell 56. **In** some embodiments, each of footrests 60 extends laterally only to an extent sufficient to receive a child's foot thereon, so as to least interfere with the rider's legs whilst the rider pushes the ground with their feet.

The shell 56 may be releasably secured to the mount 54 and/or the elongate frame 24. **In** the depicted embodiment, fixing means such as screws 62 can extend through a forward upper face of the shell 56 and into corresponding openings 64 in the mount 54. An upper end of the shell is also provided with a rearward projection 66 which can be fixed (e.g., screwed) in a correspondingly shaped opening or recess 68 formed in an underside of the elongate frame 24. Of course, other means for securing the shell 56 to the mount 54 and/or the elongate frame 24 are within the scope of the present specification. **In** at least one embodiment, the securing means may constitute a type which requires minimal to no tools or fixing accessories. For example, the shell might simply clip or lock into place by urging it around the mount and/or to the elongate frame. A quick release mechanism, button, lever and the like may also be provided to readily detach the shell from the mount and/or elongate frame.

As previously discussed, the front assembly and rear module of the presently disclosed riding vehicle can be disassembled from one another, whereupon one rear module can be interchanged with another rear module so as to arrive at a differently configured riding vehicle. In one such example, the aforedescribed balance bicycle riding vehicle 4 may be converted into a pedal bicycle riding vehicle 204. To this end, the balance bicycle rear module 20 is first disengaged from the front assembly 18, as shown in Fig. 2A. Additionally, where a shell 56 is provided with the balance bicycle configuration 4, the shell 56 can also be removed.

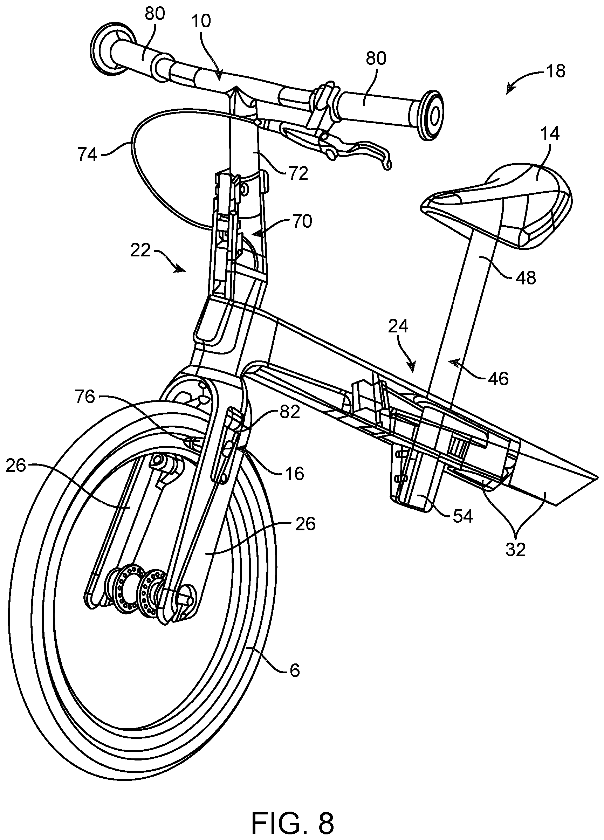

It is often the case that a larger rider (e.g., taller) is more suited to a pedal bicycle than a balance bicycle, and thus it can be desirable to adjust the front assembly accordingly for the larger rider. The front assembly can thus be adjusted as needed so that a resulting pedal bicycle configuration is suitably comfortable for the rider. For example, and with reference to Fig. 8, a height of the handlebar 10 can be raised. In such embodiments, the head assembly 22 may comprise a headset 70 extending upwardly from a front of the elongate frame 24, the headset 70 housing a stem 72 of the handlebar 10 which can be slidably adjusted and lockable relative to the headset 70 to effect height adjustment of the handlebar 10. In some embodiments, a cable 74 associated with the braking mechanism 16 is partially contained within the head assembly 22 (e.g. the headset 70 thereof). Additionally, the brake mechanism 16 also comprises laterally opposed brake pads 76 for squeezing therebetween a rim of the front wheel 6 for braking thereof. In at least one embodiment, each brake pad 76 is at least partially housed or embedded within a respective front prong 26 of the headset assembly 22. One such embodiment is shown in Fig. 7 wherein the front brake mechanism 16 adjacent the front wheel 6 is depicted substantially housed within the front prongs 26. Optionally, each of the front prongs 26 is formed with a designated recess 82 in which at least an outer portion of a respective brake pad 76 is received. In this way, at least a portion of the braking mechanism 16 is concealed or at least difficult to inadvertently physically contact so as to reduce the likelihood of younger riders unnecessarily engaging with these components of the riding vehicle 2.

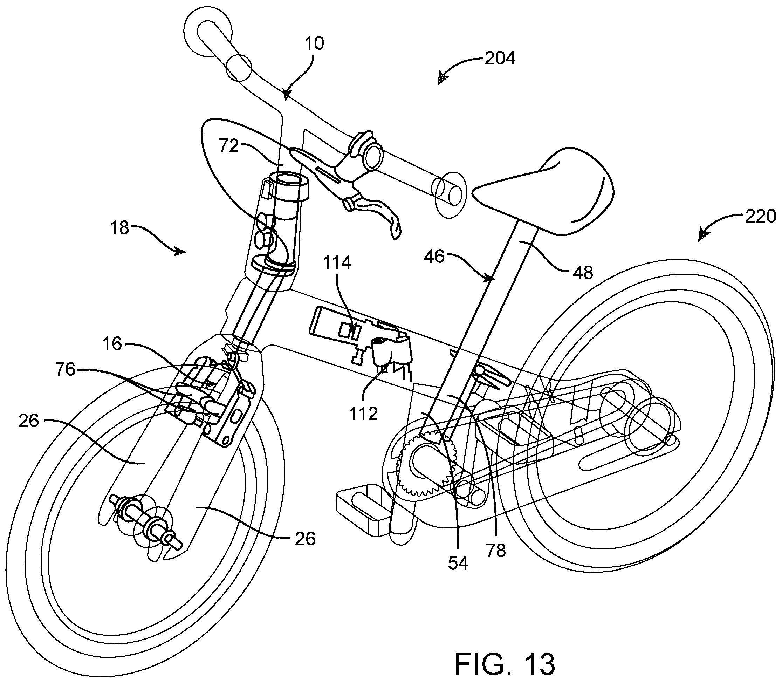

In configuring the front assembly 18, the height of the seat 14 may also be raised so as to suit the height of the rider. Fig. 8 shows the seat 14 raised to its maximum height above the elongate frame 24. In this configuration, a substantial proportion of the seat post 46 is above the elongate frame 24, wherein a lower end of the seat post 46 is received through the channel 50 of the elongate frame 24 and may not necessarily be received within the aligned channel of the mount 54. For example, in Fig. 13, only a lowermost end 78 of the seat post 46 protrudes into the channel of the mount 54. Of course, the seat 14 may indeed be lowered such that a greater proportion of the post 46 protrudes into the channel of the mount 54.

In configuring the front assembly, it is envisaged that in at least one embodiment, a length of the handlebar 10 can be selectively adjusted to vary a distance between the hand grip ends 80 thereof. In some cases, this may be achieved via a telescopic mechanism, which allows pulling the hand grip ends 80 of the handlebar 10 away from one another to extend or lengthen the handlebar 10, and pushing the hand grip ends 80 toward one another to retract or shorten the handlebar 10.

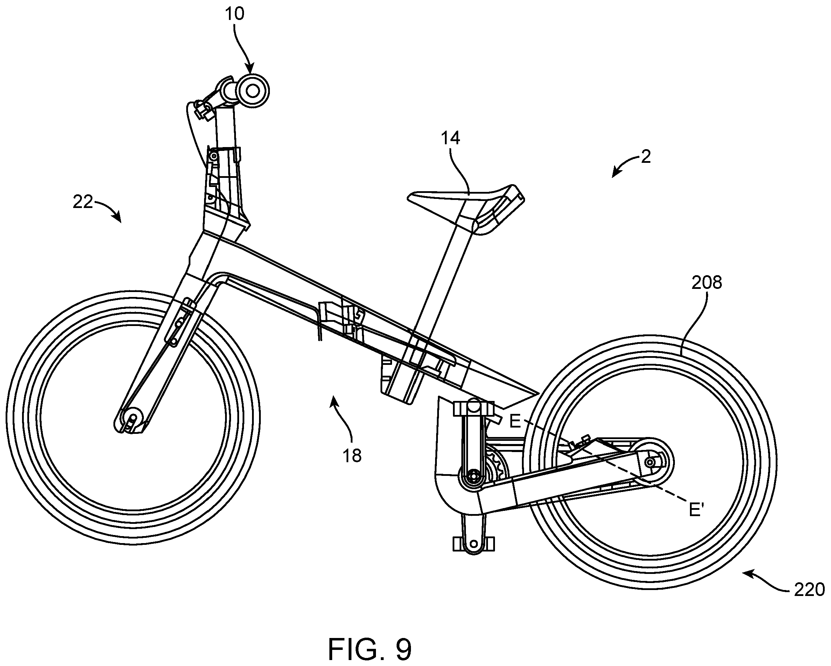

Following adjustment of the front assembly as needed, or alternatively, before such adjustment, an alternative rear module can be mounted to the front assembly to convert the riding vehicle into a pedal bicycle. This alternative rear module may also be referred to herein as a pedal bicycle rear module, rear module, pedal bicycle module, or, for simplicity, a 'pedal module'. Fig. 9 shows an example pedal module 220 being arranged relative to the front assembly 18 ready for mounting thereto to form the pedal bicycle 204 shown in Fig. 10.

The pedal module 220 comprises a rear wheel 208 which is rotatable on a rear wheel axle 234, and two laterally spaced apart connectors 236 which are configured to secure to the elongate frame 24 of the front assembly 18. Each connector 234 is disposed on a respective side of the rear wheel 208 and extends generally forwardly from the rear wheel axle 234 so as to be alignable with and securable to the rearwardly extending prongs 32 of the elongate frame 24 of the front assembly 18. When the connectors 236 are secured to the prongs 232 of the elongate frame 24, it can be said that the connectors 236 and the elongate frame 24 together form the bicycle frame of the resulting pedal bicycle. In the depicted embodiment, when the pedal module 220 is connected to the front assembly 18, the corresponding connectors 236 and elongate frame 224 together form what can be referred to as the bicycle frame 212 of the pedal bicycle 204. In other words, when the front assembly and the rear module are not secured to one another, the bicycle frame of the riding vehicle is not yet formed and is incomplete; it is by engaging the connectors 236 of the pedal module 220 to the elongate frame 24 of the front assembly 18 that the bicycle frame 212 of the pedal bicycle 204 is formed. In at least one embodiment, the bicycle frame 212 of the pedal bicycle 204 configuration differs from the bicycle frame 12 of the balance bicycle 4 configuration, as will be discussed.

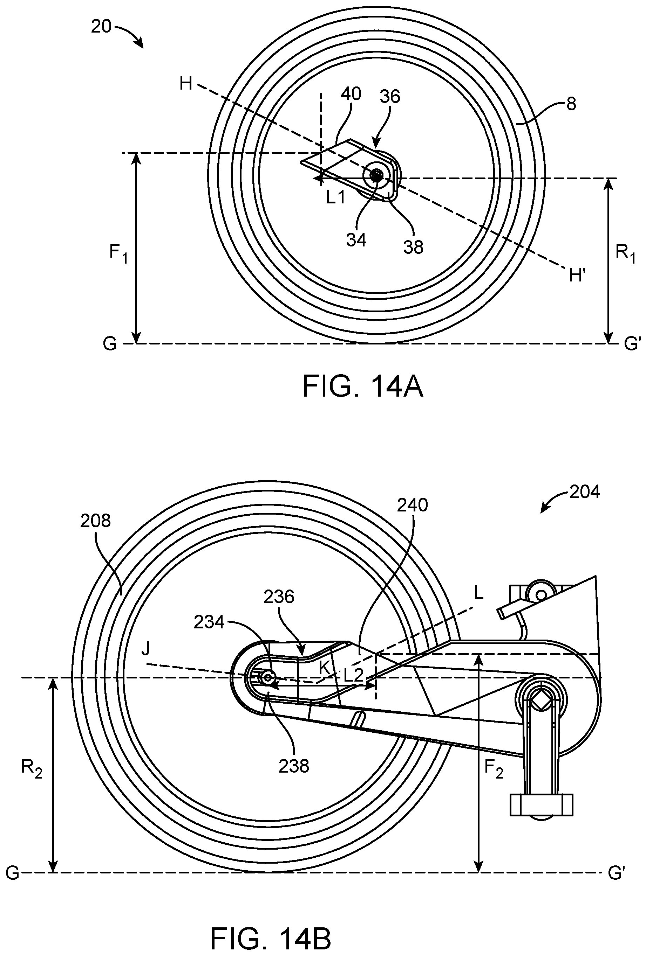

In the depicted pedal module 200, each connector 236 can be considered to constitute a rearmost tip or end of the bicycle frame 212 of the resulting pedal bicycle 220. Put another way, when the rear module 220 and front assembly 18 are connected to one another, each connector 236 of the pedal module 220 can be thought of as an extension of a respective prong 32 of the elongate frame 24, so as to complete the bicycle frame 212 of the pedal bicycle configuration 204. To this end, a lateral spacing between the connectors 236 generally corresponds to a lateral spacing between the prongs 32 of the elongate frame 24. Additionally, an angle at which each connector 236 extends forwardly from the rear wheel axle 234 (relative to a ground plane) corresponds to an angle at which the elongate frame 24 and/or prongs 32 thereof project rearwardly, such that when the connectors 236 are secured to the prongs 32, the resulting bicycle frame 212 is substantially continuous and comprises a longitudinal axis which extends through the elongate frame 24 and the connectors 236 which are aligned therewith (e.g., see the dashed line B-B' in Fig. 10). To this end, each connector 236 comprises a rear portion 238 via which the connectors 236 are mounted to respective sides of the rear wheel axle 234. From the rear portion 238, each connector 236 extends generally forwardly and then upwardly so as to align with the respective prongs 32 of the elongate frame 24 (see the dashed line E-E' in Fig. 9). Each connector 236 extends a relatively short distance such that, when viewed side on, as in Fig. 14B, the connectors 236 do not extend beyond a rim of the rear wheel 208. In this way, when securing the pedal module 220 to the front assembly 18, the prongs 32 of the elongate frame 24 are configured to extend around opposite sides of, for example, a forward upper quadrant of the rear wheel 208 such that the rear wheel 208 can be accommodated in the space between the prongs 32 of the elongate frame 24.

Each connector 236 of the pedal module 220 extends forwardly and upwardly from the rear wheel axle 234 and terminates in a respective front portion 240 configured to engage a respective prong 32 of the elongate frame 24. For example, each front portion 240 may comprise prong engagement features 242 operable to engage the prongs 32. As previously discussed, the prongs 32 may also have corresponding or complementary connector engagement features 44 operable to engage the pedal module connectors 236. For example, the front portion or face of each connector 236 may comprise projections, tongues, grooves, slots etc., while the distal end or face of each prong 32 may comprise complementary and/or cooperating features for engagement with those of the pedal module connectors 236. It is envisaged that any number of different connection mechanisms may be provided to facilitate the releasable engagement between the connectors and the prongs of the elongate frame. **In** yet another example, the connectors and respective prongs may engage one another telescopically. For example, the distal end of the prongs may be slotted into a corresponding opening in a front portion of a respective connector. The connection mechanism may also comprise latches, levers and the like. It is envisaged that the connection mechanism is one which achieves a strong and secure connection between the front assembly and the pedal module, which securement is releasable with relative ease, preferably without requiring the use of tools or fixing components. **In** this way, one can simply and manually bring the connectors toward the respective prongs for engagement therewith (e.g., by urging the connectors toward, into or against the respective prongs). Correspondingly, if the pedal module is to be detached from the front assembly, one may, for example, actuate a lever, press a quick release button, and the like, so as to easily disengage the pedal module from the prongs of the elongate frame with minimal or no requirement of tools.

**In** at least one embodiment, both the pedal module and the balance module are engageable with the prongs of the front assembly via the same connection mechanism. **In** such embodiments, the prong engagement features of the connectors of the pedal module would be identical to the prong engagement features of the connectors of the balance module. **In** this way, neither rear module nor the front assembly need be further adjusted or adapted to enable conversion between the balance bicycle and pedal bicycle configurations. Indeed, one rear module can simply be disconnected from the front assembly so as to be readily replaced by the other rear module, the prongs of the front assembly engaging each module via the same engagement mechanism. **In** this way, the front assembly and the pedal bicycle rear module and the balance bicycle rear module may constitute a kit wherein the pedal module and the balance module are interchangeably securable to the front assembly to convert the riding vehicle between the pedal bicycle configuration and the balance bicycle configuration. Of course, and as previously discussed, other kits may be formed depending on the configuration of the rear modules. For example, the kit may also include rear modules to enable conversion into a tricycle configuration, or a configuration with rear training wheels and so on. In at least one embodiment, the riding vehicle is provided with the front assembly and one of the rear modules already assembled and a user (e.g., a parent) can selectively replace the rear module as desired.

In the depicted embodiment, the rear wheel 208 of the pedal module 220 has a larger diameter than that of the rear wheel 8 of the balance module 20. For example, in the balance bicycle configuration 204, the rear wheel 8 of the balance module 20 may be smaller than the diameter of the front wheel 6 of the front assembly 18. In a specific example, the diameter of the rear wheel 8 of the balance module 20 is approximately 14", and the diameter of the rear wheel 208 of the pedal module 220 is approximately 16". The smaller rear wheel 8 of the balance module 20 may result in a balance bicycle 4 that is lower to the ground so as to better facilitate contact between the rider's feet and the ground. In the pedal bicycle configuration 204, the rear wheel 208 of the pedal module 220 is larger than of the balance module rear wheel 8. In at least one embodiment, the rear wheel 208 of the pedal module 220 has the same diameter as that of the front wheel 6 of the front assembly 18. In other words, in the depicted balance bicycle configuration 4, the wheels 6, 8 of the balance bicycle 4 are of different sizes wherein the rear wheel diameter is smaller than the front wheel diameter. By comparison, in the depicted pedal bicycle configuration 204, the wheels 6, 208 of the pedal bicycle 204 are of identical diameters. As such, the rear wheel diameter of the pedal module 220 is larger than that of the balance module 20.

Since the elongate frame 24 and thus prongs 32 of the front assembly 18 are utilised in each riding vehicle configuration 4, 204, and since the rear wheel 208 of the pedal module 220 is larger in diameter than that of the balance module 20, then the connectors 236 of the pedal module 220 ought to differ in shape, size, position and/or orientation from the connectors 36 of the balance module 20 to facilitate mounting of the pedal module 220 to the prongs 32 of the front assembly 18. Indeed, this can be seen by comparing Figs. 14A and 14B, which show the balance and pedal modules 20, 220 respectively relative to an imaginary ground plane G-G' which runs tangential to a lowermost point of the respective rear wheels 8, 208. The rear wheel 8 of the balance module 20 is of a first diameter which is smaller than that of the rear wheel 208 of the pedal module 220. As such, the balance module rear wheel axle 34, and thus the corresponding rear portions 38 of the balance module connectors 36, are spaced above the ground plane G-G' by a first rear distance R₁, whereas the rear portions 238 of the pedal module connectors 236 are spaced above the ground plane G-G' by a second rear distance R₂ which is greater than the first rear distance R₁ by a first extent, 'E₁'. In particular, the difference between the first and second rear distances R₁, R₂ corresponds with the difference in wheel size diameters between the pedal module 220 and the balance module 20. Moreover, the connectors 236 of the pedal module 220 extend further forward of the pedal wheel axle 234 as compared with the connectors 36 of the balance module 20. In other words, the front portions 240 of the pedal module connectors 236 are closer to the rim of the pedal module rear wheel 208 as compared with the front portions 40 of the balance module connectors 36 relative to the rim of the balance module rear wheel 8. As can be seen, the front portions 40 of the respective balance module connectors 36 are spaced above the ground plane G-G' by a first front distance F₁, and the front portions 240 of the respective pedal module connectors 236 are spaced above the ground plane G-G' by a second front distance F₂. In some embodiments, F₂ is longer than F₁, as generally resulting from the larger diameter of the pedal module rear wheel 208.

The aforementioned geometric relationships between the pedal module connectors 236 and the balance module connectors 36 facilitate engagement between the respective modules 220, 20 and the front assembly 18. In particular, since the construction of the prongs 32 of the front assembly 18 remains unchanged in each riding vehicle configuration 4, 204, both sets of connectors 36, 236 present similar if not identically structured prong-engaging front portions 40, 240 for engagement with the prongs 32 of the front assembly 18.

In the depicted embodiment, the balance module connectors 36 extend linearly from the balance rear wheel axle 34 at a first angle, relative to the ground plane G-G', as indicated by the dashed line H-H' in Fig. 14A. By comparison, and with reference to Fig. 14B, the pedal module connectors 236 have an elbow-like configuration as indicated by dashed line J-K-L, wherein the rear portion 238 extends forwardly from the rear wheel axle 234 along a trajectory that is angled downwardly toward the ground plane G-G', before angling back up so as to terminate at a front portion 240 which is slightly above the height of the pedal module wheel axle 234.

The respective rear portions 38, 238 of the balance and pedal module connectors 36, 236 differ in height above the ground plane G-G' in correspondence with the difference in respective wheel diameters. Also, a length L1 as measured between axle 34 and a vertical axis passing through a center of front portion 40 of the balance rear module, is, in some embodiments, shorter than a corresponding length L2 in the pedal rear module (where L2 extends between axle 234 and a vertical axis passing through a center of front portion 240). Due to these geometrical differences, attachment of the pedal rear module to the front assembly would cause the front assembly to slightly "pivot" or be tilted (e.g. with respect to the front wheel axle), raising the prong ends higher above the ground such that at least a rear part of the frame of the front assembly, e.g. a part that includes the seat, is slightly lifted further upwards above the ground. In addition, due to the difference between L1 and L2, a total length of the complete bicycle frame in the pedal bike configuration may be longer than that of the balance bike configuration. As such, the pedal bicycle can be better suited for a taller child user.

(For clarity, it is noted that when a "portion" is addressed in the context of dimensions and/or geometric relations with other portions, the point of reference can be at least a respective center of that portion.)

A further difference between the balance and pedal modules 20, 220 is that the pedal module 220 comprises a chain drive 84 disposed at one side of the pedal module rear wheel 208, and two pedals 86 which are operable to drive the rear wheel 208 via the chain drive 84. The pedal module 220 also comprises a chain cover 88 for covering at least a part of the chain drive 84, the chain cover 88 comprising a rearward end 90 associated with the pedal module rear wheel axle 234, and a forward end 92 from which one of the two pedals 86 laterally extends. In at least one embodiment, the chain cover 88 may comprise, be formed around, or be integrally formed with, the pedal module connector 236 located on the same side as the chain cover 88. In the embodiment depicted in Fig. 14B, the rearward end 90 of the chain cover 88 comprises the rear portion 238 of the pedal module connector 236 disposed on the same side of the rear wheel 208 as the chain cover 88. Moreover, it can be seen that the front portion 240 of said connector 236 is located between the rearward and forward ends 90, 92 of the chain cover 88. As will be discussed, the chain cover 88 may define a first casing part which forms part of a chain drive casing 94 that is at least partially mounted to the mount 54 disposed beneath the elongate frame 24.

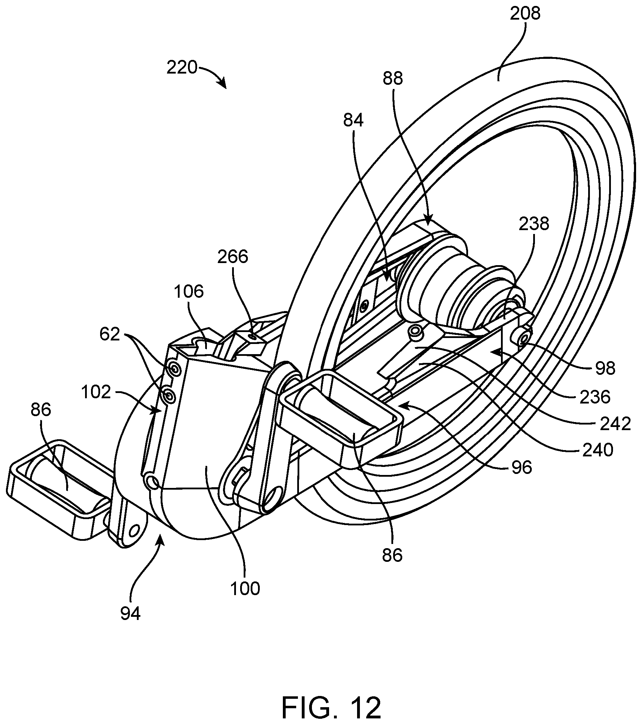

The pedal module 220 further comprises a second casing part 96 on the side of the rear wheel 208 which does not have the chain drive 84 or chain cover 88. The second casing part 96 may be somewhat similar in form to the chain cover 88 in that it also comprises a rearward end 98 associated with a corresponding side of the rear wheel axle 234, and a forward end 100 from which the other of the two pedals 86 extends. In at least one embodiment, the rearward end 98 of the second casing part 96 comprises the rear portion 238 of the pedal module connector 236 that is located on the same side of the rear wheel 208 as the second casing part 96. Similarly, the front portion 240 of that connector 236 is disposed between the rearward and forward ends 98, 100 of the second casing part 96. In at least one embodiment, such as that shown in Fig. 12, the second casing part 96 may be integrally formed with the pedal module connector 236 on the same side of the rear wheel 208.

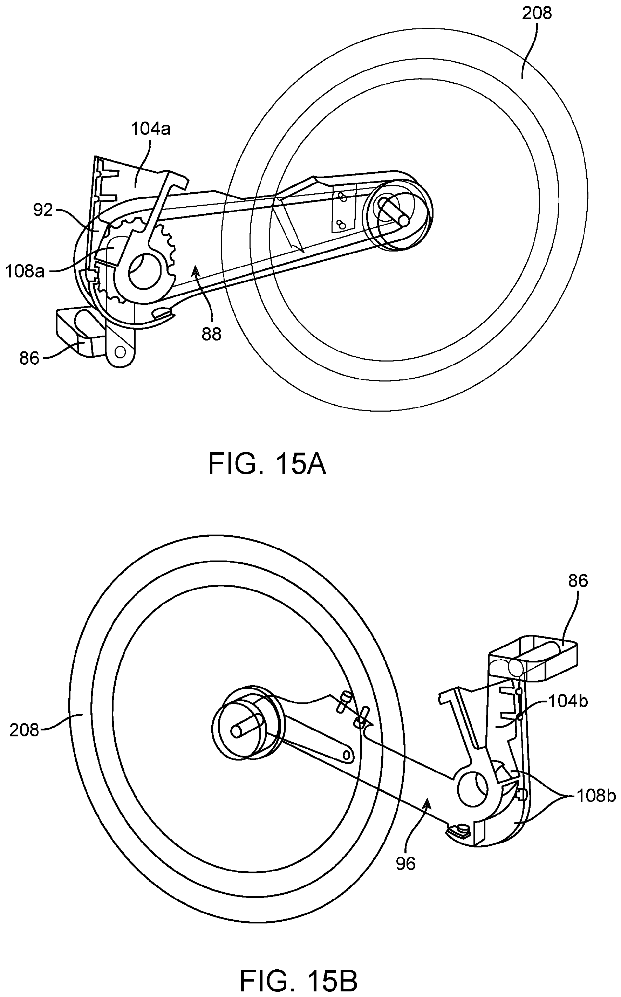

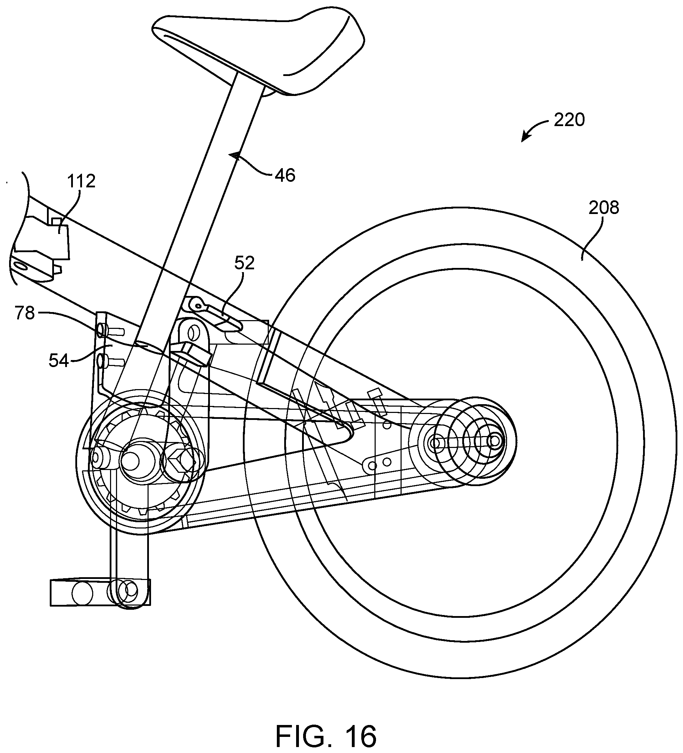

In at least one embodiment, the chain cover 88 and the second casing part 96 are laterally opposed to one another on opposite sides of the rear wheel 208, wherein respective forward ends 92, 100 of the chain cover 88 and the second casing part 96 are secured or securable to one another to form a shell-like housing 102 for at least partially encasing the mount 54 and/or a segment of the seat post 46. In this way, the chain cover 88 may be considered a first casing part which meets the second casing part 96 at an interface so that together, they form a chain cover casing 94. Fig. 15A shows the shape of a recess or cavity 104a formed in the forward end 92 of the chain cover 88, and Fig. 15B shows the shape of an opposed recess or cavity 104b formed in the forward end 100 of the second casing part 96. When the chain cover casing part 88 and the second casing part 96 are brought together, the cavities 104a, 104b of the respective forward ends 92, 100 thereof together define an internal housing 108 that is shaped to snugly receive or encase around the mount 54, as shown in Fig. 16. Moreover, each of the lower ends of the respective cavities 104a, 104b also comprises a downwardly extending recess 108a, 108b sized to receive a segment of the seat post 46. In this way, the chain cover casing 102 defines an internal space or housing 106 which accommodates both the mount 54 and at least a lower portion of the seat post 46 if the seat 14 is lowered to at least some extent relative to the elongate frame 24. For example, with reference to Fig. 16 which shows the seat 14 in its highest position, the seat 14 can be lowered since the lower end 78 of the post 46 can be accommodated to a predetermined extent within the correspondingly shaped recess 108a, 108b defined between the chain cover casing part 88 and the second casing part 96.

A forward end of the chain cover casing 102 may be secured to the mount 54 and/or an underside of the elongate frame 24 in a manner similar to that of the shell component 56 which may accompany the balance module 20. For example, referring to Fig. 12, the forward end of the chain cover casing 102 (formed from the forward ends 92, 100 of the chain cover 88 and second casing part 96, respectively) may similarly be provided with fixing elements such as screws 62 which can be screwed into corresponding openings 64 formed in a front of the mount 54. The forward end of the casing 102 may also comprise a rearward projection 266 at an upper end thereof which is securable (e.g., screwable, lockable etc.) to the correspondingly sized slot or recess 68 formed in an underside of the elongate frame 24. Of course, alternative mechanisms for securing the chain cover casing to the mount and/or elongate frame are within the scope of the present specification. For example, it is considered that the chain cover casing may clip, latch, lock etc. to the mount and/or elongate frame with minimal to no requirement for tools or fixing accessories. In this way, the front assembly is secured to the rear module not only via engagement between the prongs and corresponding pedal module connectors; engagement between the chain cover casing of the rear module and the mount and/or elongate frame help to further locate and fix the pedal module relative to the front assembly. Additionally, it is envisaged that quick release mechanisms and the like may be utilised to readily detach the pedal module from the front assembly, including disengagement of the chain cover casing from the mount and/or elongate frame.

In at least one embodiment of the presently disclosed riding vehicle, the elongate frame is lockably foldable. Folding of the vehicle can improve the vehicle's stowability and/or portability. For example, when the vehicle is in a riding state, the elongate frame would be locked in an unfolded state such that the front wheel is in line with the rear wheel of the rear module, the vehicle being configured for riding (e.g., as a balance bicycle or a pedal bicycle). By folding the elongate frame, the vehicle can be configured from the unfolded riding state to a folded or stowed state, wherein the front wheel is generally adjacent and parallel to the rear wheel of the rear module. Advantageously, since it is the elongate frame which folds, the riding vehicle can fold and assume a stowed state regardless of the specific rear module is secured to the front assembly. In this way, the riding vehicle can be folded into the stowed state regardless of whether it is in a balance bicycle configuration or a pedal bicycle configuration.

In at least one embodiment, such as that depicted in Fig. 3, it is an intermediate portion or location 110 of the elongate frame 24 that is configured to fold. For example, the folding location 110 may be generally between a front of the elongate frame 24 (near the head assembly) and the position of the seat 14. In general, the location of the fold 110 along the elongate frame 24 is such that, when folded into the stowed state, the front and rear wheels of the riding vehicle are generally positioned relative to one another to minimise the footprint of the stowed riding vehicle. For example, the elongate frame might be folded such that the front wheel and the corresponding wheel of the rear module are generally aligned with one another such that one wheel does not extend further outward than the other wheel. This can be achieved, for example, when the diameter of the rear wheel is smaller than that of the front wheel, such as in the balance bicycle configuration, but also when the rear and front wheel diameters are similar or identical, such as in the pedal bicycle configuration.

The riding vehicle may comprise a latch or other manually operable mechanism to facilitate the lockable folding and unfolding of the elongate frame. In at least one embodiment, such a mechanism may include one or more latches and/or levers which, when locked, are configured to be substantially flush with the elongate frame so that they are not accidentally actuated. Fig. 7 shows a hinge 112 of the elongate frame which permits folding thereof. A lockable levering 114 mechanism is disposed at an opposite side of the elongate frame 24 and is manually operable to unlock the frame 24 and permit folding thereof into the stowed state, whereupon the levering mechanism 114 can be locked to maintain the riding vehicle in the stowed state.

The folding hinge of the elongate frame is positioned at a location which is spaced from the distal prong ends at which the front assembly removably engages the rear module. This can be beneficial for various reasons. For example, the spaced apart location can reduce the likelihood of a user (e.g., a parent) confusing the manually operable mechanism (e.g., a first lever) for folding of the elongate frame with another manually operable mechanism (e.g., a second lever) for detaching the rear module from the front assembly. Additionally, the spaced apart location can improve a durability of the bicycle frame (as compared with a bicycle frame wherein the folding hinge and the detachment of the rear module are in close proximity to each other).

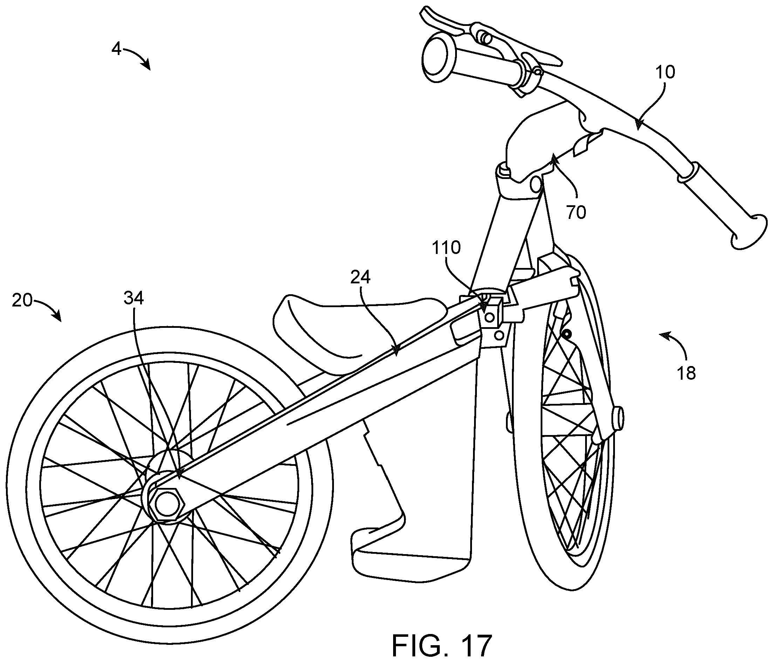

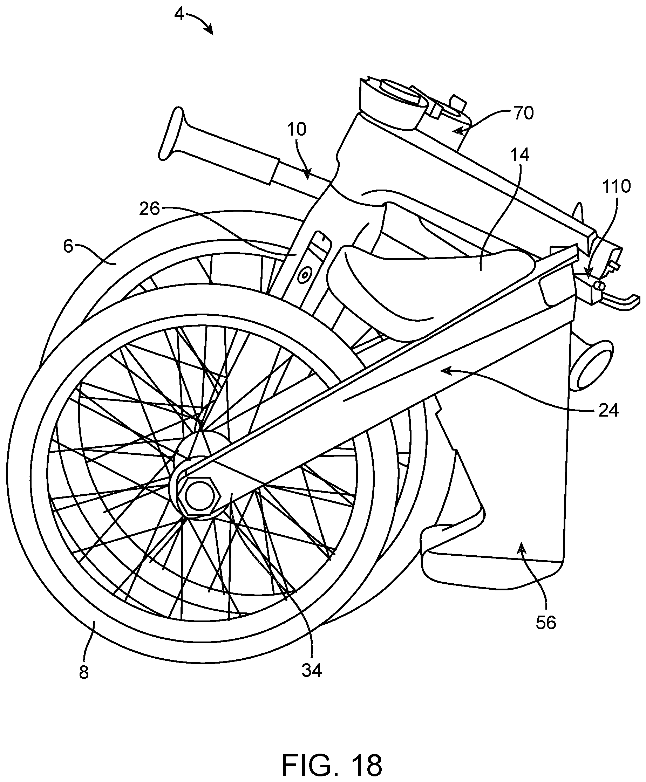

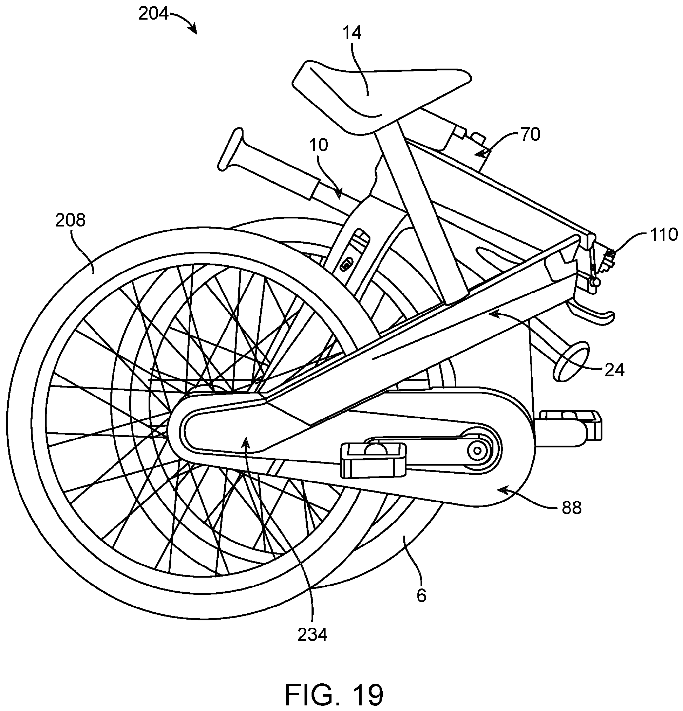

To further minimise the volume and/or footprint of the riding vehicle in the stowed state, an upper end of the head assembly is foldable to collapse the handlebar downwardly towards the front wheel. For example, the headset 70 may be hingedly secured relative to the elongate frame 24, the vehicle further comprising a manually operable latch, lever or the like to selectively lock the headset 70 to permit the handlebar 10 to fold downward. Fig. 17 shows an example balance bicycle configuration in the process of being folded toward a stowed state, wherein the elongate frame 24 has been unlocked and is partially folded, and the headset 70 has been unlocked such that the handlebar 10 is partially folded downwardly. Fig. 18 shows the balance bicycle of Fig. 17 wherein the elongate frame 24 has been folded and the handlebar 10 collapsed so that the balance bicycle riding vehicle 2 is in a stowed state. Fig. 19 shows how a pedal bicycle configuration would be folded into the stowed state.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integers or steps.

The reference in this specification to any prior publication (or information derived from it), or to any matter which is known, is not, and should not be taken as an acknowledgment or admission or any form of suggestion that that prior publication (or information derived from it) or known matter forms part of the common general knowledge in the field of endeavour to which this specification relates.

It is to be understood that various alterations, modifications and/or additions may be made without departing from the spirit of the present invention as disclosed herein.

## Claims

1. A front assembly for use with a rear module mountable thereto to form a riding vehicle, the rear module having a rear wheel rotatable on a wheel axle, and two laterally spaced apart connectors each having a front portion forwardly spaced from a respective side of the wheel axle and a rear portion via which the connector is mounted to a respective side of the wheel axle, the front assembly comprising:
an elongate frame;
a mount disposed beneath the elongate frame via which the rear module or a component associated with the rear module is securable to the elongate frame;
a head assembly associated with a front wheel at a lower end thereof and comprising a handlebar for steering the front wheel; and
a seat mounted relative to the elongate frame,
the elongate frame extending from the head assembly distally and terminating in two laterally spaced apart prongs, each prong being removably securable at least to a respective front portion of the connectors to facilitate mounting of the rear module to the front assembly to form a bicycle, wherein the two connectors, together with the elongate frame, constitute a bicycle frame of the bicycle.

2. The front assembly of claim **1,** wherein the spaced apart prongs are free of an ability to be secured directly to the wheel axle.

3. The front assembly of claim 1 or 2, wherein an intermediate location of the elongate frame between the head assembly and the seat comprises a hinge for folding the front assembly into a compact storage configuration.

4. A riding vehicle, comprising the front assembly of any one of the preceding claims, and a rear module.

5. The vehicle of claim 4, wherein the rear module is constituted by a first rear module comprising a first rear wheel rotatable on a first wheel axle, and two laterally spaced apart first connectors at respective sides of the first wheel axle, each first connector having a first rear portion via which the first connectors are mounted to respective sides of the first wheel axle, and a first front portion forwardly spaced from the first wheel axle via which each first front portion is removably securable to a respective prong so that the two first connectors, together with the elongate frame, constitute a first bicycle frame of a first bicycle configuration, said first rear module being replaceable by a second rear module comprising a second rear wheel rotatable on a second wheel axle, and two laterally spaced apart second connectors at respective sides of the second wheel axle, each second connector having a second rear portion via which the second connectors are mounted to respective sides of the second wheel axle, and a second front portion forwardly spaced from the second wheel axle via which each second front portion is removably securable to a respective prong so that the two second connectors, together with the elongate frame, constitute a second bicycle frame of a second bicycle configuration, the second bicycle frame differing from the first bicycle frame.

6. The vehicle of claim 5, wherein the first front portions of the first connectors and the second front portions of the second connectors comprise identical prong engagement features operable to engage the prongs.

7. The vehicle of any one of claims 5 or 6, wherein the lateral spacing between the first connectors and the lateral spacing between the second connectors correspond with the lateral spacing between the prongs.

8. The vehicle of any one of claims 5 to 7, wherein:
in the first bicycle frame, at least the first front portion of each first connector is aligned with a respective prong; and
in the second bicycle frame, at least the second front portion of each second connector is aligned with a respective prong,
wherein the first front portion of each first connector and the second front portion of each second connector are located at different locations with respect to the axle of their respective first and second rear wheels.

9. The vehicle of any one of claims 5 to 8, having an imaginary base plane that is tangential to respective lowermost points of the front and rear wheels of the vehicle, wherein:
the first rear portions are spaced above the plane by a first rear distance;
the second rear portions are spaced above the plane by a second rear distance, the first and second rear distances differing to a first extent;
the first front portions are spaced above the plane by a first front distance; and
the second front portions are spaced above the plane by a second front distance, the first and second rear distances being equal or differing by a second extent which is smaller than the first extent.

10. A riding vehicle that is convertible between a first and a second configuration, the riding vehicle comprising:
a front assembly comprising:
an elongate frame;
a head assembly associated with a front wheel at a lower end thereof and comprising a handlebar for steering the front wheel; and
a seat mounted relative to the elongate frame; and
a rear module having a rear wheel rotatable on a wheel axle, the rear module being removably secured to the elongate frame and being constituted by one of the following modules which are interchangeably securable to the front assembly to convert the riding vehicle between the first and second configurations:
a first rear module comprising a first rear wheel having a first radius and rotatable on a first wheel axle, and two laterally spaced apart first connectors at respective sides of the first wheel axle, each first connector having a first rear portion via which the first connectors are mounted to a respective side of the wheel axle, and a first front portion via which the first connectors are secured to the elongate frame; or
a second rear module comprising a second rear wheel having a second radius and rotatable on a second wheel axle, the second radius being smaller than the first radius, and two laterally spaced apart second connectors at respective sides of the second wheel axis, each second connector having a second rear portion via which the second connectors are mounted to a respective side of the wheel axle, and a second front portion via which the second connectors are secured to the elongate frame.

11. The vehicle of claim 10, having an imaginary base plane that is tangential to respective lowermost points of the front and respective rear wheels of the vehicle, wherein:
the first rear portions are spaced above the plane by a first rear distance;
the second rear portions are spaced above the plane by a second rear distance, the first and second rear distances differing to an extent corresponding to the difference in radii of the first and second rear wheels.

12. The vehicle of any one of claims 10 or **11,** wherein one of the first and second configurations constitutes a pedal bicycle configuration and the other of the first and second configurations constitutes a balance bicycle configuration.

13. The vehicle of any one of claims 10 to 12, wherein when the vehicle constitutes a pedal bicycle configuration, the corresponding rear module further comprises:
a chain drive disposed at one side of the corresponding rear wheel;
two pedals operable to drive said rear wheel via the chain drive; and
a chain cover covering at least part of the chain drive, the chain cover having a rearward end associated with the corresponding wheel axle, and a forward end from which a first of the two pedals laterally extends.

14. A riding vehicle that is convertible between a balance bicycle configuration and a pedal bicycle configuration, the riding vehicle comprising:
a front assembly comprising:
an elongate frame associated with a mount;
a head assembly associated with a front wheel at a lower end thereof and comprising a handlebar for steering the front wheel; and
a seat mounted relative to the elongate frame; and
a rear module having a rear wheel rotatable on a wheel axle, the rear module being removably secured to the front assembly and constituted by one of the following:
a first rear module operable in the pedal bicycle configuration and having a first rear wheel rotatable on a first wheel axle, a chain drive disposed at a first side of the first rear wheel and two pedals for driving the first rear wheel via the chain drive; or
a second rear module operable in the balance bicycle configuration and having a second rear wheel rotatable on a second wheel axle,
the first and second rear modules being interchangeably securable to the elongate frame to convert the riding vehicle between the pedal and balance bicycle configurations, respectively, wherein
the first rear module at least partially encases said mount in the pedal bicycle configuration; and
in the balance bicycle configuration, the vehicle comprises at least one component which at least partially encases the mount, said at least one component being forward of the second rear module.

15. The vehicle of claim 14, wherein the first rear module comprises connectors that extend forwardly of the first wheel axle by a distance that is less than a radius of the first rear wheel; and wherein the second rear module comprises connectors that extend forwardly of the second wheel axle by a distance that is less than a radius of the second rear wheel.
